# EUROPEAN PATENT SPECIFICATION

(11) **EP 3 911 205 B1**
(45) Date of publication and mention of the grant of the patent: **02.07.2025**
(21) Application number: 20700273.4
(22) Date of filing: 10.01.2020
(51) Int. Cl.: A47J 37/06

(54) **A COOKING APPARATUS**
KOCHVORRICHTUNG
APPAREIL DE CUISSON

(30) Priority: 17.01.2019 EP 19152209
(43) Date of publication of application: 24.11.2021
(73) Proprietor: Versuni Holding B.V., 5656 AE Eindhoven (NL)
(72) Inventor: TE VELDE, Mart, 5656 AE Eindhoven (NL); DE VREEDE, Jasper, 5656 AE Eindhoven (NL)
(74) Representative: Vollering, Stefanus Franciscus Maria
(86) International application number: PCT/EP2020/050474
(87) International publication number: WO 2020/148164

(56) References cited:
- WO-A1-2014/195192
- WO-A1-2018/024781
- CN-A- 108 577 581
- JP-A- 2014 054 340
- KR-A- 20090 054 551
- US-A1- 2008 163 764
- US-A1- 2015 201 806

## Description

### FIELD OF THE INVENTION

The present disclosure relates to a cooking apparatus, and in particular a cooking apparatus having both convection heating and steam cooking functionalities.

### BACKGROUND OF THE INVENTION

Steam cooking apparatus, such as steam ovens, have been increasingly popular because of their ability to retain moisture and flavor in foods compared to conventional ovens and microwave ovens. It is much easier to avoid problems such as overcooking, drying, and shrinkage of food using steam cooking. Moreover, nutrients such as vitamins and minerals are less prone to degradation when foods are cooked with steam, compared to many other cooking methods. However, currently available steam ovens, like normal convection ovens, are typically big and expensive. Moreover, typical configurations of steam ovens make them difficult to clean. The document US 2015/201806 A1 discloses a cooking apparatus.

### SUMMARY OF THE INVENTION

There are a number of disadvantages associated with the currently available cooking apparatuses that are capable of convection heating and/or steam cooking. For example, as mentioned above, currently available steam ovens typically have a large size and are expensive to manufacture. In addition, current available cooking ovens have configurations that make them difficult to be cleaned thoroughly.

To better address one or more of the concerns mentioned earlier, in a first aspect, there is provided a cooking apparatus. The cooking apparatus comprises a housing; a cooking compartment arranged at the housing, the cooking compartment being configured to form a first enclosed space in which food item can be received; a heating unit arranged inside a second enclosed space in the housing, wherein the cooking compartment comprises an air inlet through which air can enter from a side of the cooking compartment, and an air outlet through which air can exit from an opposite side of the cooking compartment, and wherein the air inlet and the air outlet are connected to the second enclosed space such that air heated by the heating unit can circulate between the second enclosed space and the cooking compartment.

In some embodiments, the cooking apparatus according may further comprise a fan configured to generate an air flow at the second enclosed space so as to facilitate the air flow circulation between the second enclosed space and the cooking compartment.

In some embodiments, the cooking compartment may comprise: a receptacle having a top opening; and a covering element configured to be coupled to the receptacle to cover the top opening of the receptacle so as to form the first enclosed space. In these embodiments, the air inlet and the air outlet may be arranged at opposite sides of the receptacle.

In some embodiments, the cooking apparatus may further comprise a cooking compartment sealing unit arranged at the receptacle and/or the covering element. In these embodiments, the cooking compartment sealing unit may be configured form a seal between the receptacle and the covering element when the covering element is coupled to the receptacle.

In some embodiments, when the covering element is coupled to the receptacle, a first gap and a second gap may be formed between the covering element and the receptacle. In these embodiments, when the cooking compartment is located at the housing, the first gap may form the air inlet and the second gap may form the air outlet.

In some embodiments, the covering element may have a dome shape. In some embodiments, the covering element may be at least partially transparent.

According to the invention, the cooking apparatus further comprises a water reservoir configured to store water, the water reservoir being connected to the heating unit such that water can be delivered from the water reservoir to the heating unit for steam generation. In these embodiments, the cooking apparatus may further comprise a water pump configured to pump water from the water reservoir to the heating unit.

In some embodiments, the cooking compartment may be removable from the housing, and the second enclosed space may be formed when the cooking compartment is located at the housing.

In some embodiments, the cooking apparatus may further comprise a housing sealing unit configured to form a seal between the cooking compartment and the housing when the cooking compartment is located in the housing.

In some embodiments, the cooking compartment may further comprise one or more handles.

In some embodiments, the heating unit may comprise a heating plate.

In some embodiments, the heating unit may comprise a tubular heater, and in these embodiments, the cooking apparatus may further comprise an upper plate arranged in the second enclosed space above the tubular heater, and a lower plate arranged in the second enclosed space between the tubular heater and a bottom of the housing.

According to the aspects and embodiments described above, the limitations of existing techniques are addressed. In particular, the above-described aspects and embodiments provide a cooking apparatus that is compact and cheap to manufacture. There is thus provided an improved cooking apparatus. These and other aspects of the disclosure will be apparent from and elucidated with reference to the embodiment(s) described hereinafter.

### BRIEF DESCRIPTION OF THE DRAWINGS

For a better understanding of the embodiments, and to show more clearly how they may be carried into effect, reference will now be made, by way of example only, to the accompanying drawings, in which:
Fig. 1 is a block diagram of a cooking apparatus according to an embodiment;
Fig. 2A is an exploded view diagram of a cooking apparatus according to another embodiment;
Fig. 2B is a cross-sectional view diagram of the cooking apparatus of Fig. 2A;
Fig. 3 is a cross-sectional view diagram of a cooking apparatus according to another embodiment;
Fig. 4 is a cross-sectional view diagram of a cooking apparatus according to another embodiment;
Fig. 5 is a cross-sectional view diagram of a cooking apparatus according to another embodiment; and
Fig. 6 is a cross-sectional view diagram of a cooking apparatus according to another embodiment.

### DETAILED DESCRIPTION OF EMBODIMENTS

As noted above, there is provided a cooking apparatus which addresses the existing problems.

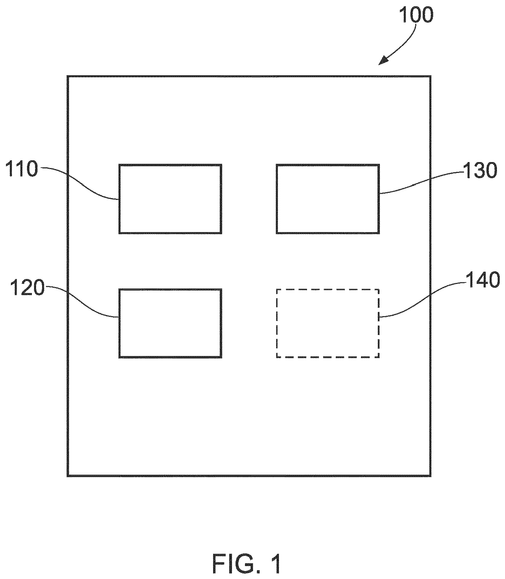

Fig. 1 is a block diagram of a cooking apparatus 100 according to an embodiment. The cooking apparatus 100 includes at least a convection heating function and a steam cooking function. Therefore, in some embodiments, the cooking apparatus 100 may be a combined convection and steam oven. The cooking apparatus 100 comprises a housing 110, a cooking compartment 120, a heating unit 130, and a fan 140. The cooking compartment 120 is arranged at the housing 110, and it is configured to form a first enclosed space in which food item can be received. The heating unit 130 is arranged inside a second enclosed space in the housing 110.

In addition, the cooking compartment 120 comprises an air inlet through which air can enter from a side of the cooking compartment 120, and an air outlet through which air can exit from an opposite side of the cooking compartment 120. The air inlet and the air outlet are connected to the second enclosed space where the heating unit 130 is located. In this way, the air heated by the heating unit 130 can circulate between the second enclosed space and the cooking compartment 120. Moreover, the fan 140 is configured to generate an air flow at the second enclosed space so as to facilitate the air flow circulation between the second enclosed space and the cooking compartment 120.

The cooking compartment 120 may be removable from the housing 110 in some embodiments. In this case, the second enclosed space may be formed when the cooking compartment 120 is located at the housing 110. A housing sealing unit may be provided to form a seal between the cooking compartment 120 and the housing 110 when the cooking compartment 120 is located at the housing 110. In addition, in some embodiments, the cooking compartment 120 may further comprise one or more handles. The one or more handles allow easy removal of the cooking compartment 120 from the housing 110.

The cooking compartment 120 may comprise a receptacle (e.g. a food tray) having a top opening and a covering element (e.g. a lid) configured to be coupled to the receptacle to cover the top opening of the receptacle so as to form the first enclosed space. In these embodiments, the air inlet and the air outlet may be arranged at opposite sides of the receptacle. The covering element may have a dome shape so as to allow accommodation of larger-sized food items in the cooking compartment 120. Also, the covering element may be at least partially transparent to allow a user to easily view a cooking process of the food items received in the cooking compartment 120.

In some embodiments, when the covering element is coupled to the receptacle, a first gap and a second gap may be formed between the covering element and the receptacle. In these embodiments, when the cooking compartment 120 is located at the housing 110, the first gap may form the air inlet and the second gap may form the air outlet.

Furthermore, a cooking compartment sealing unit may be provided to form a seal between the receptacle and the covering element when the covering element is coupled to the receptacle. The cooking compartment sealing unit may be arranged at the receptacle and/or the covering element to achieve the sealing effect.

Although not shown in the drawing, the cooking apparatus 100 may further comprise a water reservoir configured to store water. **In** these embodiments, the water reservoir may be connected to the heating unit 130 such that water can be delivered from the water reservoir to the heating unit 130 for steam generation. The generated steam can then also be circulated between the second enclosed space and the cooking compartment (e.g. along the air flow generated by the fan 140). Moreover, although not shown in the drawing, the cooking apparatus 100 may further comprise a water pump configured to pump water from the water reservoir to the heating unit 130.

**In** some embodiments, the heating unit 130 may comprise a heating plate. The shape of a flat heating plate maximizes a surface area for convection heating. Also, as mentioned above, in some embodiments the cooking apparatus 100 may include components for steam generation. **In** these embodiments, the shape of the flat heating plate would also maximize a surface area for steam generation.

**In** alternative embodiments, the heating unit 130 may comprise a tubular heater. **In** these embodiments, the cooking apparatus 100 may further comprise an upper plate arranged in the second enclosed space above the tubular heater, and a lower plate arranged in the second enclosed space between the tubular heater and a bottom of the housing 110. The upper and lower plates provide heat insulation between the tubular heater and the rest of the cooking apparatus, especially the cooking compartment 120 and the bottom of the housing 110.

Although not shown in the drawing, the cooking apparatus 100 may further comprise at least one user interface. A user interface may be for use in providing a user of the cooking apparatus 100 with information relating to the cooking apparatus 100 (e.g. an on/off status of the cooking apparatus 100, a cooking temperature setting of the cooking apparatus 100, an operation mode of the cooking apparatus 100). Alternatively or in addition, a user interface may be configured to receive a user input. For example, a user interface may allow a user of the cooking apparatus 100 to manually enter instructions, data, or information. In these embodiments, a control unit may be provided and configured to acquire the user input from one or more user interfaces.

A user interface may be any user interface that enables the rendering (or output or display) of information to a user of the cooking apparatus 100. Alternatively or in addition, a user interface may be any user interface that enables a user of the cooking apparatus 100 to provide a user input, interact with and/or control the cooking apparatus 100. For example, the user interface may comprise one or more switches, one or more buttons, a keypad, a keyboard, a touch screen or an application (for example, on a tablet or smartphone), a display screen, a graphical user interface (GUI) or other visual rendering component, one or more speakers, one or more microphones or any other audio component, one or more lights, a component for providing tactile feedback, or any other user interface, or combination of user interfaces.

Although not shown in the drawing, the cooking apparatus 100 may further comprise a control unit. The control unit may be configured to control the fan 140 to generate the air flow at the second enclosed space. More specifically, the control unit may be configured to control a speed of the fan 140. Alternatively or additionally, the control unit may be configured to control power supply to the heating unit 130. This control may be based on a measured temperature in the cooking compartment 120 (e.g. via a control loop). Alternatively or additionally, in embodiments where a water reservoir is provided at the cooking apparatus 100, the control unit may be configured to control the water delivery between the water reservoir and the heating unit 130. The control unit can comprise one or more processors, processing units, multi-core processor or modules that are configured or programmed to control the cooking apparatus 100 in the manner described herein. In particular implementations, the control unit can comprise a plurality of software and/or hardware modules (e.g. image analysis software) for performing such control.

The control unit can be implemented in numerous ways, with software and/or hardware, to perform the various functions described below. The control unit may comprise one or more microprocessors or digital signal processor (DSPs) that may be programmed using software or computer program code to perform the required functions and/or to control components of the control unit to effect the required functions. The control unit may be implemented as a combination of dedicated hardware to perform some functions (e.g. amplifiers, pre-amplifiers, analog-to-digital convertors (ADCs) and/or digital-to-analog convertors (DACs)) and a processor (e.g., one or more programmed microprocessors, controllers, DSPs and associated circuitry) to perform other functions. Examples of components that may be employed in various embodiments of the present disclosure include, but are not limited to, conventional microprocessors, DSPs, application specific integrated circuits (ASICs), and field-programmable gate arrays (FPGAs).

It will be appreciated that Fig. 1 only shows the components required to illustrate an aspect of the cooking apparatus 100, and in a practical implementation, the cooking apparatus 100 may comprise alternative or additional components to those shown. For example, the cooking apparatus 100 may comprise a battery or other power supply for powering the cooking apparatus 100 or means for connecting the cooking apparatus 100 to a mains power supply.

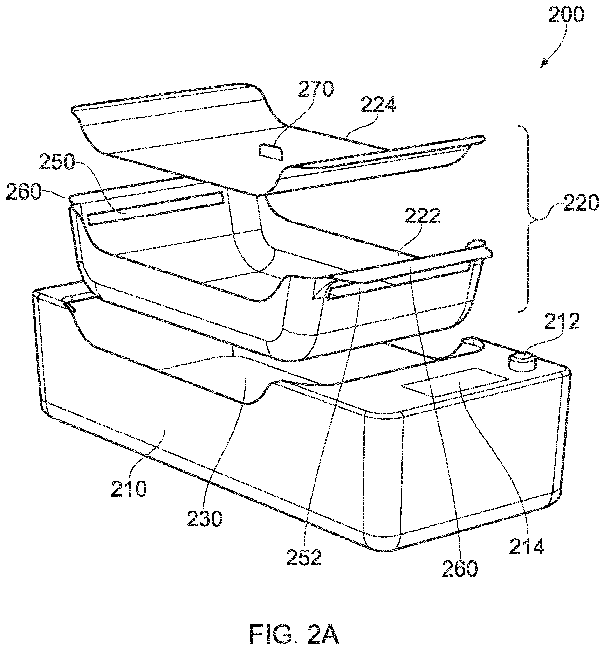

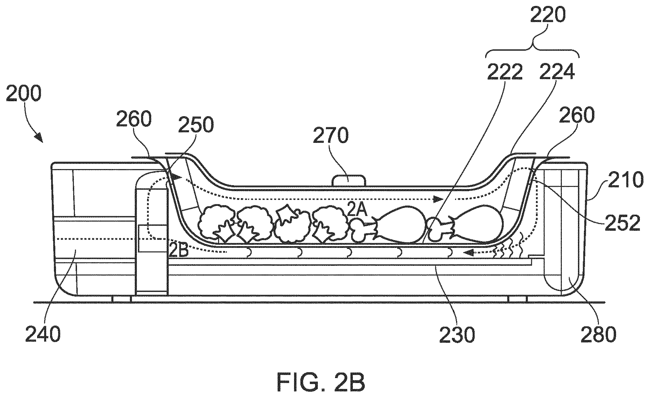

Fig. 2A is an exploded view diagram of a cooking apparatus 200 according to another embodiment, and Fig. 2B is a cross-sectional view diagram of the cooking apparatus 200 of Fig. 2A. As shown in Fig. 2A, the cooking apparatus 200 in the present embodiment comprises a housing 210, a cooking compartment 220, a heating unit 230, and a fan 240.

Although the cooking compartment 220 is arranged at the housing 210, it is also removable from the housing 210 in the present embodiment such that the inner surfaces of the housing 210 as well as the heating unit 230 (which is located inside the housing 210) can be cleaned without significant obstruction. Also, since the cooking compartment 220 is removable in this embodiment, it can be used for serving food directly at the table. The cooking compartment 220 comprises a receptacle 222 and a covering element 224. The receptacle 222 has a top opening through which food items can be received and removed, and the covering element 224 is configured to be coupled to the receptacle 222 to cover the top opening of the receptacle 222. A protrusion 270 is arranged at the top side of the covering element 224 so as to allow a user to lift the covering element 224 up easily to remove it away from the receptacle 222. This way, the user can introduce and/or remove food item(s) to and from the receptacle 222 easily by removing the covering element 224.

**In** addition, the cooking compartment 220 comprises an air inlet 250 and an air outlet 252 which are respectively arranged on opposite sides of the receptacle 222 such that an air flow path within the cooking apparatus 200 can be established in a straightforward manner, as will be described in more detail below. The cooking compartment 220 further comprises two handles 260 arranged at opposite sides of the receptacle 222 so as to facilitate removal of the cooking compartment 220 from the housing 210. As shown in Fig. 2, the covering element 224 in the present embodiment comprises raised circumferential edge which at least engages with the two handles 260 when the covering element 224 is coupled to the receptacle 222. This particular configuration of the covering element 224 enables heated air and/or generated steam to be more specifically directed towards the food item(s) received therein so as to speed up the cooking process as well as to achieve an even heat distribution within the cooking compartment 220.

**In** the present embodiment, an actuation unit 212 and a display unit 214 are provided at a top surface of the housing 210. The actuation unit 212 may be configured such that upon actuation of the actuation unit 212, the cooking apparatus 200 can be switched on/off. Alternatively, the actuation unit 212 may be implemented as a dial for controlling a temperature level associated with the heating unit 230. The display unit 214 may be configured to display information relevant to the operation of the cooking apparatus 200, such as an on/off status of the cooking apparatus 200, a cooking temperature setting of the cooking apparatus 200, an operation mode of the cooking apparatus 200, etc. In some embodiments, the actuation unit 212 and the display unit 214 may be regarded as part of a user interface of the cooking apparatus 200.

In the cross-sectional view of the cooking apparatus 200 as provided in Fig. 2B, it is shown that when the covering element 224 is coupled to the receptacle 222, a first enclosed space 2A is formed at the cooking compartment 220. Also, when the cooking compartment 220 is located at the housing 210, a second enclosed space 2B is formed within the housing 210. Specifically, it is shown in Fig. 2B that the second enclosed space 2B is partly formed by the housing 210 and partly formed by an outer wall of the receptacle 222 of the cooking compartment 220. Also, the heating unit 230 comprises a heating plate located inside the second enclosed space 2B and directly beneath the cooking compartment 220 when the cooking compartment 220 is located at the housing 210.

As mentioned above with reference to Fig. 2A, the cooking compartment 220 comprises an air inlet 250 and an air outlet 252 which are respectively arranged an opposite sides of the receptacle 222. It is further illustrated in Fig. 2B that the air inlet 250 is arranged at the receptacle 222 such that when the cooking compartment 220 (and in this case, at least the receptacle 222) is located at the housing 210, air can enter from the second enclosed space 2B through the air inlet 250 and into the receptacle 222 (and therefore the first enclosed space 2A). Furthermore, the air outlet 252 is arranged at the receptacle 222 such that when the cooking compartment 220 (and in this case, at least the receptacle 222) is located at the housing 210, air can exit from the receptacle 222 (and therefore the first enclosed space 2A) at a side opposite from where air enters, i.e. through the air outlet 252 which is opposite to the air inlet 250, and into the second enclosed space 2B. As a result, when the receptacle 222 (with or without the covering element 224) is located at the housing 210, the air inlet 250 and the air outlet 252 can be regarded as being connected to the second enclosed space 2B. Accordingly, air heated by the heating unit 230 in the second enclosed space 2B can be circulated between the second enclosed space 2B and the cooking compartment 220. The air flow circulation (denoted by the arrows in Fig. 2B) can be facilitated by an air flow generated by the fan 240, which is located adjacent to the second enclosed space 2B.

As illustrated in Fig. 2B, the cooking apparatus 200 in this embodiment further comprises a water reservoir 280 which is connected to the heating unit such that water stored in the water reservoir 280 can be delivered to the heating unit 230 for steam generation. Therefore, in this embodiment, the generated steam can also be carried in the air flow circulation from the second enclosed space 2B to the cooking compartment 220 via the air flow generated by the fan 240. Once the generated steam enters the cooking compartment 220 through the air inlet 250, it can be used for steam cooking the food item(s) received in the receptacle 222.

It will be appreciated that Fig. 2A and Fig. 2B only show the components required to illustrate an aspect of the cooking apparatus 200, and in a practical implementation, the cooking apparatus 200 may comprise alternative or additional components to those shown.

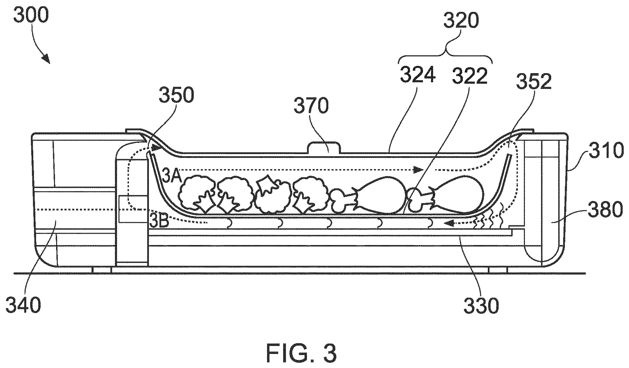

Fig. 3 is a cross-sectional view diagram of a cooking apparatus 300 according to another embodiment. The cooking apparatus 300 in the present embodiment is similar to the cooking apparatus 200 of Fig. 2 in that it also comprises a housing 310, a cooking compartment 320, a heating unit 330, a fan 340, and a water reservoir 380.

Similar to the cooking compartment 220 of Fig. 2, the cooking compartment 320 in the present embodiment is also removable from the housing 310 so that the inner surfaces of the housing 210 as well as the heating unit 230 (which is located inside the housing 210) can be cleaned without significant obstruction. Also, the cooking compartment 320 comprises a receptacle 322 and a covering element 324. The receptacle 322 has a top opening through which food items can be received, and the covering element 324 is configured to be coupled to the receptacle 322 to cover the top opening of the receptacle 322. A protrusion 370 is arranged at the top side of the covering element 324 so as to allow a user to lift the covering element 324 up easily to remove it away from the receptacle 322. This way, the user can introduce and/or remove food item(s) to and from the receptacle 322 simply by removing the covering element 324.

When the covering element 324 is coupled to the receptacle 322, a first enclosed space 3A is formed at the cooking compartment 320. Also, when the cooking compartment 320 is located at the housing 310, a second enclosed space 3B is formed within the housing 310. Specifically, the second enclosed space 3B is partly formed by the housing 310 and partly formed by an outer wall of the receptacle 322 of the cooking compartment 320. Also, the heating unit 330 comprises a heating plate located inside the second enclosed space 3B and directly beneath the cooking compartment 320 when the cooking compartment 320 is located at the housing 310.

Furthermore, the covering element 324 of the cooking compartment 320 in this embodiment is comprises a raised circumferential edge which engages with a part of the housing 310 when the covering element 324 is coupled to the receptacle 322. Therefore, when the receptacle 322 is located at the housing 310 and when the covering element 324 is coupled to the receptacle 322, a first gap and a second gap are formed between the covering element 324 and the receptacle 322. The first gap in this case serves as an air inlet 350 of the cooking compartment 320 and the second gap serves as an air outlet 352 of the cooking compartment 320. Also, the air inlet 350 and the air outlet 352 are arranged on opposite sides of the cooking compartment 320 such that an air flow path within the cooking apparatus 300 can be established in a straightforward manner. In more detail, the air inlet 350 is arranged at the cooking compartment 320 such that when the cooking compartment 320 is located at the housing 310, air can enter from the second enclosed space 3B through the air inlet 350 and into the cooking compartment 320 (and therefore the first enclosed space 3A). Furthermore, the air outlet 352 is arranged at the cooking compartment 320 such that when the cooking compartment 320 is located at the housing 310, air can exit from the cooking compartment 320 (and therefore the first enclosed space 3A) at a side opposite from where air enters, i.e. through the air outlet 352 which is opposite to the air inlet 350, and into the second enclosed space 3B. As a result, when the cooking compartment 320 is located at the housing 310, the air inlet 350 and the air outlet 352 can be regarded as being connected to the second enclosed space 3B. Accordingly, air heated by the heating unit 330 in the second enclosed space 3B can be circulated between the second enclosed space 3B and the cooking compartment 320. The air flow circulation (denoted by the arrows in Fig. 3) can be facilitated by an air flow generated by the fan 340, which is located adjacent to the second enclosed space 3B.

In this embodiment, the water reservoir 380 is connected to the heating unit 330 such that water stored in the water reservoir 380 can be delivered to the heating unit 330 for steam generation. Therefore, in this embodiment, the generated steam can also be carried in the air flow circulation from the second enclosed space 3B to the cooking compartment 320 via the air flow generated by the fan 340. Once the generated steam enters the cooking compartment 320 through the air inlet 350, it can be used for steam cooking the food item(s) received in the receptacle 322.

It will be appreciated that Fig. 3 only shows the components required to illustrate an aspect of the cooking apparatus 300, and in a practical implementation, the cooking apparatus 300 may comprise alternative or additional components to those shown.

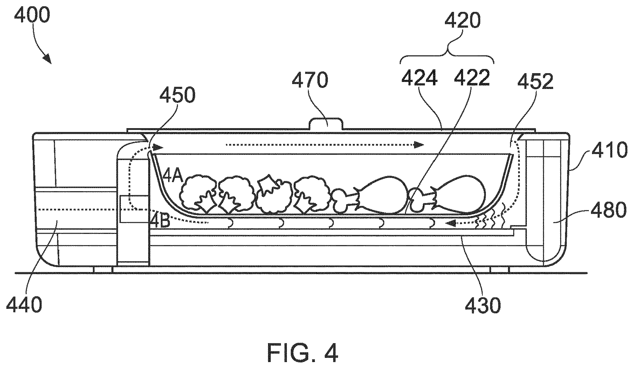

Fig. 4 is a cross-sectional view diagram of a cooking apparatus 400 according to another embodiment. The cooking apparatus 400 in the present embodiment is similar to the cooking apparatus 300 of Fig. 3 in that it also comprises a housing 410, a cooking compartment 420, a heating unit 430, a fan 440, and a water reservoir 480. Furthermore, similar to the cooking compartment 320 of Fig. 3, the cooking compartment 420 of the cooking apparatus 400 in this embodiment also comprises a receptacle 422 and a covering element 424, both components being removable from the housing 410. The functionalities of the protrusion 470 provided at the covering element 424, the heating unit 430, the fan 440, and the water reservoir 480 are the same as those described with reference to Fig. 3, and therefore description of these components will be omitted for brevity.

When the covering element 424 is coupled to the receptacle 422, a first enclosed space 4A is formed at the cooking compartment 420. Also, when the cooking compartment 420 is located at the housing 410, a second enclosed space 4B is formed within the housing 410. Specifically, the second enclosed space 4B is partly formed by the housing 410 and partly formed by an outer wall of the receptacle 422 of the cooking compartment 420. Also, the heating unit 430 comprises a heating plate located inside the second enclosed space 4B and directly beneath the cooking compartment 420 when the cooking compartment 420 is located at the housing 410.

The difference between the cooking apparatus 400 of Fig. 4 and the cooking apparatus 300 of the Fig. 3 is that while the covering element 324 of Fig. 3 comprises a raised circumferential edge which engages with a part of the housing 310 when it is coupled to the receptacle 322, the covering element 424 of this embodiment has a generally flat shape and is configured such that at least a part of its circumferential edge engages with a part of the housing 410 when the covering element 424 is coupled to the receptacle 422. In this arrangement, when the covering element 424 is coupled to the receptacle 422 (by way of engaging with a part of the housing 410), a first gap and a second gap are formed on opposite sides between the covering element 424 and the receptacle 422. The first gap in this case serves as an air inlet 450 of the cooking compartment 420 and the second gap serves as an air outlet 452 of the cooking compartment 420. Similar to the cooking apparatus 300 of Fig. 3, since the air inlet 450 and the air outlet 452 are arranged on opposite sides of the cooking compartment 420, an air flow path can be established within the cooking apparatus 400 in a straightforward manner.

In more detail, the air inlet 450 is arranged at the cooking compartment 420 such that when the cooking compartment 420 is located at the housing 410, air can enter from the second enclosed space 4B through the air inlet 450 and into the cooking compartment 420 (and therefore the first enclosed space 4A). Furthermore, the air outlet 452 is arranged at the cooking compartment 420 such that when the cooking compartment 420 is located at the housing 410, air can exit from the cooking compartment 420 (and therefore the first enclosed space 4A) at a side opposite from where air enters, i.e. through the air outlet 452 which is opposite to the air inlet 450, and into the second enclosed space 4B. As a result, when the cooking compartment 420 is located at the housing 410, the air inlet 450 and the air outlet4 can be regarded as being connected to the second enclosed space 4B. Accordingly, air heated by the heating unit 430 in the second enclosed space 4B can be circulated between the second enclosed space 4B and the cooking compartment 420. The air flow circulation (denoted by the arrows in Fig. 4) can be facilitated by an air flow generated by the fan 440, which is located adjacent to the second enclosed space 4B.

Comparing the cooking compartment 320 of Fig. 3 and the cooking compartment 420 of Fig. 4, the cooking compartment 420 of Fig. 4 provides a larger first enclosed space 4A for accommodating food item(s). Nevertheless, in comparison with the cooking compartment 420 of Fig. 4, the cooking compartment 320 of Fig. 3 is configured such that heated air and/or generated steam is more specifically directed towards the food item(s) received therein by way of the shape of the covering element 424 so as to speed up the cooking process.

It will be appreciated that Fig. 4 only shows the components required to illustrate an aspect of the cooking apparatus 400, and in a practical implementation, the cooking apparatus 400 may comprise alternative or additional components to those shown.

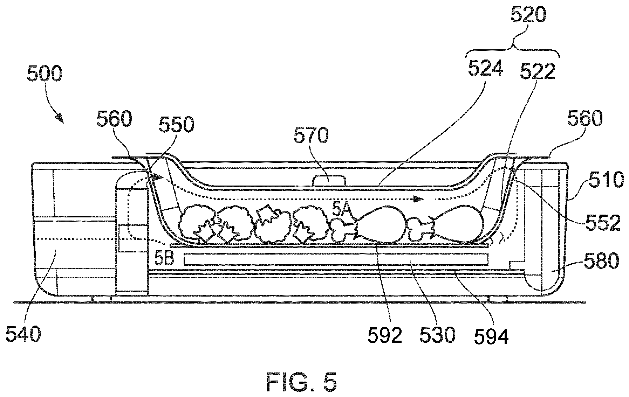

Fig. 5 is a cross-sectional view diagram of a cooking apparatus 500 according to another embodiment. The cooking apparatus 500 in the present embodiment is similar to the cooking apparatus 200 of Fig. 2A and Fig. 2B in that it also comprises a housing 510, a cooking compartment 520, a heating unit 530, a fan 540, and a water reservoir 580. Furthermore, similar to the cooking compartment 220 of Fig. 2A and Fig. 2B, the cooking compartment 520 of the cooking apparatus 500 in this embodiment also comprises a receptacle 522 and a covering element 524, both components being removable from the housing 510. The functionalities of the protrusion 570 provided at the covering element 524, the fan 540, and the water reservoir 580 are the same as those described with reference to Fig. 2A and Fig. 2B, and therefore description of these components will be omitted for brevity.

Similar to the cooking compartment 220 of Fig. 2A and Fig. 2B, the cooking compartment 520 in this embodiment comprises an air inlet 550 and an air outlet 552 which are respectively arranged an opposite sides of the receptacle 522 such that an air flow path within the cooking apparatus 500 can be established in a straightforward manner.

The cooking compartment 520 further comprises two handles 560 arranged at opposite sides of the receptacle 522 so as to facilitate removal of the cooking compartment 220 from the housing 510. Moreover, the covering element 524 in the present embodiment comprises raised circumferential edge which at least engages with the two handles 560 when the covering element 524 is coupled to the receptacle 522. This particular configuration of the covering element 524 enables heated air and/or generated steam to be more specifically directed towards the food item(s) received therein so as to speed up the cooking process.

When the covering element 524 is coupled to the receptacle 522, a first enclosed space 5A is formed at the cooking compartment 520. Also, when the cooking compartment 520 is located at the housing 510, a second enclosed space 5B is formed within the housing 510. Specifically, it is shown in Fig. 5 that the second enclosed space 5B is partly formed by the housing 510 and partly formed by an outer wall of the receptacle 522 of the cooking compartment 520.

As shown in Fig. 5, the air inlet 550 is arranged at the receptacle 522 such that when the cooking compartment 520 (and in this case, at least the receptacle 522) is located at the housing 510, air can enter from the second enclosed space 5B through the air inlet 550 and into the receptacle 522 (and therefore the first enclosed space 5A). Furthermore, the air outlet 552 is arranged at the receptacle 522 such that when the cooking compartment 520 (and in this case, at least the receptacle 522) is located at the housing 510, air can exit from the receptacle 522 (and therefore the first enclosed space 5A) at a side opposite from where air enters, i.e. through the air outlet 552 which is opposite to the air inlet 550, and into the second enclosed space 5B. As a result, when the receptacle 522 (with or without the covering element 524) is located at the housing 510, the air inlet 550 and the air outlet 552 can be regarded as being connected to the second enclosed space 5B.

The difference between the cooking apparatus 500 of Fig. 5 and the cooking apparatus 200 of Fig. 2A and Fig. 2B is that while the heating unit 230 of Fig. 2A and Fig. 2B comprises a heating plate, the heating unit 530 of this embodiment comprises a tubular heater. The air heated by the tubular heater of the heating unit 530 in the second enclosed space 5B can be circulated between the second enclosed space 5B and the cooking compartment 520 via the air inlet 550 and the air outlet 552. The air flow circulation (denoted by the arrows in Fig. 5) can be further facilitated by an air flow generated by the fan 540, which is located adjacent to the second enclosed space 5B.

Furthermore, another difference between the cooking apparatus 500 of Fig. 5 and the cooking apparatus 200 of Fig. 2A and Fig. 2B is that the cooking apparatus 500 in this embodiment further comprises an upper plate 592 arranged in the second enclosed space 5B above the tubular heater of the heating unit 530, and a lower plate 594 arranged in the second enclosed space between the tubular heater of the heating unit 530 and a bottom of the housing 510. The upper plate 592 provides heat insulation between the heating unit 540 and the cooking compartment 520, while the lower plate 594 provides heat insulation between the heating unit 540 and the bottom of the housing 510. For this purpose, the upper plate 592 and the lower plate 594 may be made of heat insulating material(s). **In** addition, the upper plate 592 also provides a barrier between the cooking compartment 520 and the second enclosed space 5B so as to prevent objects (e.g. food items) from falling into the second enclosed space, especially when the cooking compartment 520 is not located at the housing 510 or is being removed from the housing 510.

It will be appreciated that Fig. 5 only shows the components required to illustrate an aspect of the cooking apparatus 500, and in a practical implementation, the cooking apparatus 500 may comprise alternative or additional components to those shown.

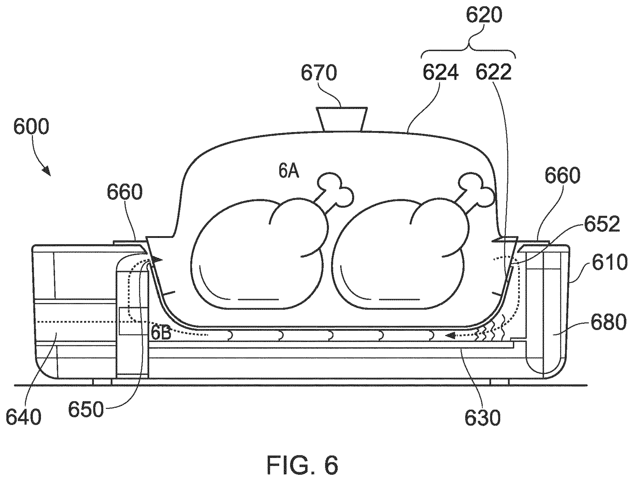

Fig. 6 is a cross-sectional view diagram of a cooking apparatus according to another embodiment. The cooking apparatus 600 in the present embodiment is similar to the cooking apparatuses 200 of Fig. 2A and Fig. 2B in that it also comprises a housing 610, a cooking compartment 620, a heating unit 630, a fan 640, and a water reservoir 680. Furthermore, similar to the cooking compartment 220 of Fig. 2A and Fig. 2B, the cooking compartment 620 of the cooking apparatus 600 in this embodiment also comprises a receptacle 622 and a covering element 624, both components being removable from the housing 610. The functionalities of the protrusion 670 provided at the covering element 624, the heating unit 630, the fan 640, and the water reservoir 680 are the same as those described with reference to Fig. 2, and therefore description of these components will be omitted for brevity.

Similar to the cooking compartment of Fig. 2A and Fig. 2B, the cooking compartment 620 in this embodiment comprises an air inlet 650 and an air outlet 652 which are respectively arranged an opposite sides of the receptacle 622 such that an air flow path within the cooking apparatus 600 can be established in a straightforward manner. The cooking compartment 620 further comprises two handles 660 arranged at opposite sides of the receptacle 622 so as to facilitate removal of the cooking compartment 620 from the housing 610.

When the covering element 624 is coupled to the receptacle 622, a first enclosed space 6A is formed at the cooking compartment 620. Also, when the cooking compartment 620 is located at the housing 610, a second enclosed space 6B is formed within the housing 610. Specifically, it is shown in Fig. 6 that the second enclosed space 6B is partly formed by the housing 610 and partly formed by an outer wall of the receptacle 622 of the cooking compartment 620. Also, the heating unit 630 comprises a heating plate located inside the second enclosed space 6B and directly beneath the cooking compartment 620 when the cooking compartment 620 is located at the housing 610.

As shown in Fig. 6, the air inlet 650 is arranged at the receptacle 622 such that when the cooking compartment 620 (and in this case, at least the receptacle 622) is located at the housing 610, air can enter from the second enclosed space 6B through the air inlet 650 and into the receptacle 622 (and therefore the first enclosed space 6A). Furthermore, the air outlet 652 is arranged at the receptacle 622 such that when the cooking compartment 620 (and in this case, at least the receptacle 622) is located at the housing 610, air can exit from the receptacle 622 (and therefore the first enclosed space 6A) at a side opposite from where air enters, i.e. through the air outlet 652 which is opposite to the air inlet 650, and into the second enclosed space 6B. As a result, when the receptacle 622 (with or without the covering element 624) is located at the housing 610, the air inlet 650 and the air outlet 652 can be regarded as being connected to the second enclosed space 6B.

The difference between the cooking apparatus 600 of Fig. 6 and the cooking apparatus 200 of the Fig. 2A and Fig. 2B is that while the covering element 224 of Fig. 2 comprises a raised circumferential edge which at least engages with the two handles 260 when the covering element 224 is coupled to the receptacle 222, the covering element 624 of this embodiment has a generally dome shape and is configured such that at least a part of its circumferential edge engages with the handles 660 of the receptacle 622 when the covering element 624 is coupled to the receptacle 622. This particular configuration of the cooking compartment 620 allows its capacity to be maximized for accommodating more food items.

It will be appreciated that Fig. 6 only shows the components required to illustrate an aspect of the cooking apparatus 600, and in a practical implementation, the cooking apparatus 600 may comprise alternative or additional components to those shown.

There is thus provided an improved cooking apparatus which overcomes the existing problems.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. Any reference signs in the claims should not be construed as limiting the scope.

## Claims

1. A cooking apparatus (100, 200, 300, 400, 500, 600) comprising:
a housing (110, 210, 310, 410, 510, 610);
a cooking compartment (120, 220, 320, 420, 520, 620) arranged at the housing, the cooking compartment being configured to form a first enclosed space in which food item can be received;
a heating unit (130, 230, 330, 430, 530, 630) arranged inside a second enclosed space in the housing,
wherein the cooking compartment comprises an air inlet (250, 350, 450, 550, 650) through which air can enter from a side of the cooking compartment, and an air outlet (252, 352, 452, 552, 652) through which air can exit from an opposite side of the cooking compartment,
wherein the air inlet (250, 350, 450, 550, 650) and the air outlet (252, 352, 452, 552, 652) are disposed on opposite sides of the cooking compartment, and
wherein the air inlet and the air outlet are connected to the second enclosed space such that air heated by the heating unit can circulate between the second enclosed space and the cooking compartment;
**characterized in that**, the cooking apparatus further comprises a water reservoir (280, 380, 480, 580, 680) configured to store water, the water reservoir being connected to the heating unit (230, 330, 430, 530, 630) such that water can be delivered from the water reservoir to the heating unit for steam generation;
wherein the cooking apparatus includes a convection heating function and a steam cooking function.

2. The cooking apparatus (100, 200, 300, 400, 500, 600) according to claim 1, further comprising a fan (140, 240, 340, 440, 540, 640) configured to generate an air flow at the second enclosed space so as to facilitate the air flow circulation between the second enclosed space and the cooking compartment (120, 220, 320, 420, 520, 620).

3. The cooking apparatus (200, 300, 400, 500, 600) according to claim 1 or claim 2, wherein the cooking compartment (220, 320, 420, 520, 620) comprises:
a receptacle (222, 322, 422, 522, 622) having a top opening; and
a covering element (224, 324, 424, 524, 624) configured to be coupled to the receptacle to cover the top opening of the receptacle so as to form the first enclosed space.

4. The cooking apparatus (200, 300, 400, 500, 600) according to claim 3, wherein the air inlet (250, 350, 450, 550, 650) and the air outlet (252, 352, 452, 552, 652) are arranged at opposite sides of the receptacle (222, 322, 422, 522, 622).

5. The cooking apparatus (200, 300, 400, 500, 600) according to claim 3 or claim 4, further comprising a cooking compartment sealing unit arranged at the receptacle (222, 322, 422, 522, 622) and/or the covering element (224, 324, 424, 524, 624), wherein the cooking compartment sealing unit is configured form a seal between the receptacle and the covering element when the covering element is coupled to the receptacle.

6. The cooking apparatus (300, 400) according to claim 3, wherein when the covering element (324, 424) is coupled to the receptacle (322, 422), a first gap and a second gap are formed between the covering element and the receptacle, and wherein when the cooking compartment (320, 420) is located at the housing, the first gap forms the air inlet and the second gap forms the air outlet.

7. The cooking apparatus (600) according to any one of claims 3 to 6, wherein the covering element (624) has a dome shape.

8. The cooking apparatus (200, 300, 400, 500, 600) according to any one of claims 3 to 7, wherein the covering element (224, 324, 424, 524, 624) is at least partially transparent.

9. The cooking apparatus (200, 300, 400, 500, 600) according to claim 9, further comprising a water pump configured to pump water from the water reservoir (280, 380, 480, 580, 680) to the heating unit (230, 330, 430, 530, 630).

10. The cooking apparatus (100, 200, 300, 400, 500, 600) according to any one of the preceding claims, wherein the cooking compartment (120, 220, 320, 420, 520, 620) is removable from the housing (110, 210, 310, 410, 510, 610), and the second enclosed space is formed when the cooking compartment is located at the housing.

11. The cooking apparatus (100, 200, 300, 400, 500, 600) according to claim 10, further comprising a housing sealing unit configured to form a seal between the cooking compartment (120, 220, 320, 420, 520, 620) and the housing (110, 210, 310, 410, 510, 610) when the cooking compartment is located in the housing.

12. The cooking apparatus (200, 300, 400, 500, 600) according to any one of the preceding claims, wherein the cooking compartment (220, 320, 420, 520, 620) further comprises one or more handles (260, 360, 460, 560, 660).

13. The cooking apparatus (200, 300, 400, 600) according to any one of the preceding claims, wherein the heating unit (230, 330, 420, 630) comprises a heating plate.

14. The cooking apparatus (500) according to any one of the preceding claims, wherein the heating unit (530) comprises a tubular heater, and wherein the cooking apparatus further comprises an upper plate (592) arranged in the second enclosed space above the tubular heater, and a lower plate (594) arranged in the second enclosed space between the tubular heater and a bottom of the housing (510).

## Patentansprüche

1. Kocheinrichtung (100, 200, 300, 400, 500, 600), umfassend:
ein Gehäuse (110, 210, 310, 410, 510, 610);
ein Kochfach (120, 220, 320, 420, 520, 620), das am Gehäuse angeordnet ist, wobei das Kochfach konfiguriert ist, um einen ersten umschlossenen Raum zu bilden, in dem Nahrungsmittel aufgenommen werden können;
eine Heizeinheit (130, 230, 330, 430, 530, 630), die im Inneren eines zweiten umschlossenen Raumes im Gehäuse angeordnet ist,
wobei das Kochfach einen Lufteinlass (250, 350, 450, 550, 650), durch den Luft von einer Seite des Kochfaches eintreten kann, und einen Luftauslass (252, 352, 452, 552, 652) umfasst, durch den Luft von einer gegenüberliegenden Seite des Kochfaches austreten kann,
wobei der Lufteinlass (250, 350, 450, 550, 650) und der Luftauslass (252, 352, 452, 552, 652) auf gegenüberliegenden Seiten des Kochfaches angeordnet sind, und
wobei der Lufteinlass und der Luftauslass mit dem zweiten umschlossenen Raum verbunden sind, sodass von der Heizeinheit erhitzte Luft zwischen dem zweiten umschlossenen Raum und dem Kochfach zirkulieren kann;
**dadurch gekennzeichnet, dass** die Kocheinrichtung weiter ein Wasserreservoir (280, 380, 480, 580, 680) umfasst, das konfiguriert ist, um Wasser zu speichern, wobei das Wasserreservoir mit der Heizeinheit (230, 330, 430, 530, 630) verbunden ist, sodass Wasser aus dem Wasserreservoir zur Dampferzeugung an die Heizeinheit abgegeben werden kann;
wobei die Kocheinrichtung eine Konvektionsheizfunktion und eine Dampfkochfunktion beinhaltet.

2. Kocheinrichtung (100, 200, 300, 400, 500, 600) nach Anspruch 1, die weiter einen Lüfter (140, 240, 340, 440, 540, 640) umfasst, der konfiguriert ist, um einen Luftstrom am zweiten umschlossenen Raum zu erzeugen, um die Luftstromzirkulation zwischen dem zweiten umschlossenen Raum und dem Kochfach (120, 220, 320, 420, 520, 620) zu erleichtern.

3. Kocheinrichtung (200, 300, 400, 500, 600) nach Anspruch 1 oder Anspruch 2, wobei das Kochfach (220, 320, 420, 520, 620) umfasst:
einen Behälter (222, 322, 422, 522, 622), der eine obere Öffnung aufweist; und
ein Abdeckelement (224, 324, 424, 524, 624), das konfiguriert ist, um mit dem Behälter gekoppelt zu werden, um die obere Öffnung des Behälters abzudecken, um den ersten umschlossenen Raum zu bilden.

4. Kocheinrichtung (200, 300, 400, 500, 600) nach Anspruch 3, wobei der Lufteinlass (250, 350, 450, 550, 650) und der Luftauslass (252, 352, 452, 552, 652) an gegenüberliegenden Seiten des Behälters (222, 322, 422, 522, 622) angeordnet sind.

5. Kocheinrichtung (200, 300, 400, 500, 600) nach Anspruch 3 oder Anspruch 4, die weiter eine Kochfachdichtungseinheit umfasst, die am Behälter (222, 322, 422, 522, 622) und/oder dem Abdeckelement (224, 324, 424, 524, 624) angeordnet ist, wobei die Kochfachdichtungseinheit konfiguriert ist, um eine Dichtung zwischen dem Behälter und dem Abdeckelement zu bilden, wenn das Abdeckelement mit dem Behälter gekoppelt ist.

6. Kocheinrichtung (300, 400) nach Anspruch 3, wobei, wenn das Abdeckelement (324, 424) mit dem Behälter (322, 422) gekoppelt ist, ein erster Spalt und ein zweiter Spalt zwischen dem Abdeckelement und dem Behälter gebildet werden, und wobei, wenn sich das Kochfach (320, 420) am Gehäuse befindet, der erste Spalt den Lufteinlass bildet und der zweite Spalt den Luftauslass bildet.

7. Kocheinrichtung (600) nach einem der Ansprüche 3 bis 6, wobei das Abdeckelement (624) eine Kuppelform aufweist.

8. Kocheinrichtung (200, 300, 400, 500, 600) nach einem der Ansprüche 3 bis 7, wobei das Abdeckelement (224, 324, 424, 524, 624) mindestens teilweise transparent ist.

9. Kocheinrichtung (200, 300, 400, 500, 600) nach Anspruch 9, die weiter eine Wasserpumpe umfasst, die konfiguriert ist, um Wasser aus dem Wasserreservoir (280, 380, 480, 580, 680) zur Heizeinheit (230, 330, 430, 530, 630) zu pumpen.

10. Kocheinrichtung (100, 200, 300, 400, 500, 600) nach einem der vorstehenden Ansprüche, wobei das Kochfach (120, 220, 320, 420, 520, 620) aus dem Gehäuse (110, 210, 310, 410, 510, 610) entfernbar ist, und der zweite umschlossene Raum gebildet wird, wenn sich das Kochfach am Gehäuse befindet.

11. Kocheinrichtung (100, 200, 300, 400, 500, 600) nach Anspruch 10, die weiter eine Gehäusedichtungseinheit umfasst, die konfiguriert ist, um eine Dichtung zwischen dem Kochfach (120, 220, 320, 420, 520, 620) und dem Gehäuse (110, 210, 310, 410, 510, 610) zu bilden, wenn sich das Kochfach im Gehäuse befindet.

12. Kocheinrichtung (200, 300, 400, 500, 600) nach einem der vorstehenden Ansprüche, wobei das Kochfach (220, 320, 420, 520, 620) weiter einen oder mehrere Griffe (260, 360, 460, 560, 660) umfasst.

13. Kocheinrichtung (200, 300, 400, 600) nach einem der vorstehenden Ansprüche, wobei die Heizeinheit (230, 330, 420, 630) eine Heizplatte umfasst.

14. Kocheinrichtung (500) nach einem der vorstehenden Ansprüche, wobei die Heizeinheit (530) eine Röhrenheizung umfasst, und wobei die Kocheinrichtung weiter eine obere Platte (592), die im zweiten umschlossenen Raum über der Röhrenheizung angeordnet ist, und eine untere Platte (594) umfasst, die im zweiten umschlossenen Raum zwischen der Röhrenheizung und einem Boden des Gehäuses (510) angeordnet ist.

## Revendications

1. Appareil de cuisson (100, 200, 300, 400, 500, 600) comprenant :
un boîtier (110, 210, 310, 410, 510, 610) ;
un compartiment de cuisson (120, 220, 320, 420, 520, 620) agencé au niveau du boîtier, le compartiment de cuisson étant configuré pour former un premier espace clos dans lequel un aliment peut être reçu ;
une unité de chauffage (130, 230, 330, 430, 530, 630) agencée à l'intérieur d'un second espace clos dans le boîtier,
dans lequel le compartiment de cuisson comprend une entrée d'air (250, 350, 450, 550, 650), à travers laquelle de l'air peut entrer depuis un côté du compartiment de cuisson, et une sortie d'air (252, 352, 452, 552, 652), à travers laquelle de l'air peut sortir d'un côté opposé du compartiment de cuisson,
dans lequel l'entrée d'air (250, 350, 450, 550, 650) et la sortie d'air (252, 352, 452, 552, 652) sont disposées sur des côtés opposés du compartiment de cuisson, et
dans lequel l'entrée d'air et la sortie d'air sont reliées au second espace clos de sorte que l'air chauffé par l'unité de chauffage puisse circuler entre le second espace clos et le compartiment de cuisson ;
**caractérisé en ce que** l'appareil de cuisson comprend en outre un réservoir d'eau (280, 380, 480, 580, 680) configuré pour stocker de l'eau, le réservoir d'eau étant relié à l'unité de chauffage (230, 330, 430, 530, 630) de sorte que l'eau puisse être distribuée du réservoir d'eau à l'unité de chauffage pour la production de vapeur ;
dans lequel l'appareil de cuisson inclut une fonction de chauffage par convection et une fonction de cuisson à la vapeur.

2. Appareil de cuisson (100, 200, 300, 400, 500, 600) selon la revendication 1, comprenant en outre un ventilateur (140, 240, 340, 440, 540, 640) configuré pour générer un flux d'air au niveau du second espace clos de manière à faciliter la circulation de flux d'air entre le second espace clos et le compartiment de cuisson (120, 220, 320, 420, 520, 620).

3. Appareil de cuisson (200, 300, 400, 500, 600) selon la revendication 1 ou la revendication 2, dans lequel le compartiment de cuisson (220, 320, 420, 520, 620) comprend :
un réceptacle (222, 322, 422, 522, 622) présentant une ouverture supérieure ; et
un élément de recouvrement (224, 324, 424, 524, 624) configuré pour être couplé au réceptacle pour recouvrir l'ouverture supérieure du réceptacle de manière à former le premier espace clos.

4. Appareil de cuisson (200, 300, 400, 500, 600) selon la revendication 3, dans lequel l'entrée d'air (250, 350, 450, 550, 650) et la sortie d'air (252, 352, 452, 552, 652) sont agencées sur des côtés opposés du réceptacle (222, 322, 422, 522, 622).

5. Appareil de cuisson (200, 300, 400, 500, 600) selon la revendication 3 ou la revendication 4, comprenant en outre une unité d'étanchéité de compartiment de cuisson agencée au niveau du réceptacle (222, 322, 422, 522, 622) et/ou de l'élément de recouvrement (224, 324, 424, 524, 624), dans lequel l'unité d'étanchéité de compartiment de cuisson est configurée pour former un joint entre le réceptacle et l'élément de recouvrement lorsque l'élément de recouvrement est couplé au réceptacle.

6. Appareil de cuisson (300, 400) selon la revendication 3, dans lequel lorsque l'élément de recouvrement (324, 424) est couplé au réceptacle (322, 422), un premier espace et un second espace sont formés entre l'élément de recouvrement et le réceptacle, et dans lequel lorsque le compartiment de cuisson (320, 420) est situé au niveau du boîtier, le premier espace forme l'entrée d'air et le second espace forme la sortie d'air.

7. Appareil de cuisson (600) selon l'une quelconque des revendications 3 à 6, dans lequel l'élément de recouvrement (624) présente une forme de dôme.

8. Appareil de cuisson (200, 300, 400, 500, 600) selon l'une quelconque des revendications 3 à 7, dans lequel l'élément de recouvrement (224, 324, 424, 524, 624) est au moins partiellement transparent.

9. Appareil de cuisson (200, 300, 400, 500, 600) selon la revendication 9, comprenant en outre une pompe à eau configurée pour pomper de l'eau du réservoir d'eau (280, 380, 480, 580, 680) vers l'unité de chauffage (230, 330, 430, 530, 630).

10. Appareil de cuisson (100, 200, 300, 400, 500, 600) selon l'une quelconque des revendications précédentes, dans lequel le compartiment de cuisson (120, 220, 320, 420, 520, 620) peut être détaché du boîtier (110, 210, 310, 410, 510, 610), et le second espace clos est formé lorsque le compartiment de cuisson est situé au niveau du boîtier.

11. Appareil de cuisson (100, 200, 300, 400, 500, 600) selon la revendication 10, comprenant en outre une unité d'étanchéité de boîtier configurée pour former un joint entre le compartiment de cuisson (120, 220, 320, 420, 520, 620) et le boîtier (110, 210, 310, 410, 510, 610) lorsque le compartiment de cuisson est situé dans le boîtier.

12. Appareil de cuisson (200, 300, 400, 500, 600) selon l'une quelconque des revendications précédentes, dans lequel le compartiment de cuisson (220, 320, 420, 520, 620) comprend en outre une ou plusieurs poignées (260, 360, 460, 560, 660).

13. Appareil de cuisson (200, 300, 400, 600) selon l'une quelconque des revendications précédentes, dans lequel l'unité de chauffage (230, 330, 420, 630) comprend une plaque chauffante.

14. Appareil de cuisson (500) selon l'une quelconque des revendications précédentes, dans lequel l'unité de chauffage (530) comprend un élément chauffant tubulaire, et dans lequel l'appareil de cuisson comprend en outre une plaque supérieure (592) agencée dans le second espace clos au-dessus de l'élément chauffant tubulaire et une plaque inférieure (594) agencée dans le second espace clos entre l'élément chauffant tubulaire et un fond du boîtier (510).
